# EUROPEAN PATENT SPECIFICATION

(11) **EP 3 016 440 B1**
(45) Date of publication and mention of the grant of the patent: **26.08.2020**
(21) Application number: 14306746.0
(22) Date of filing: 30.10.2014
(51) Int. Cl.: H04W 76/15, H04W 16/32

(54) **Methods for setting up multiple radio links in a radio communication system, network-based sub-system, mobile station and computer program thereof**
Verfahren zur Einrichtung mehrerer Funkverbindungen in einem Funkkommunikationssystem, netzwerkbasiertes Subsystem, Mobilstation und Computerprogramm dafür
Procédés pour établir de multiples liaisons radio dans un système de communication radio, sous-système de réseau, station mobile et programme informatique associé

(43) Date of publication of application: 04.05.2016
(73) Proprietor: Alcatel Lucent, 91620 Nozay (FR)
(72) Inventor: Braun, Volker, 70435 Stuttgart (DE); Doetsch, Uwe, 70435 Stuttgart (DE); Halbauer, Hardy, 70435 Stuttgart (DE)
(74) Representative: Novagraaf Technologies

(56) References cited:
- WO-A1-2013/086164
- WO-A1-2013/089733
- US-A1- 2014 206 406
- WEILER RICHARD J ET AL: "Enabling 5G backhaul and access with millimeter-waves", 2014 EUROPEAN CONFERENCE ON NETWORKS AND COMMUNICATIONS (EUCNC), IEEE, 23 June 2014 (2014-06-23), pages 1-5, XP032629311, DOI: 10.1109/EUCNC.2014.6882644 [retrieved on 2014-08-22]

## Description

### FIELD OF THE INVENTION

The present invention relates to multiple connectivity between a mobile station and a radio communication system via two or more than two radio links and, more particularly but not exclusively, to dual connectivity provided by a first radio link based on radio access technologies which comply with the International Mobile Telecommunications-2000 (IMT-2000) specifications by the International Telecommunication Union and further provided by a second radio link based on millimetre wave frequencies.

### BACKGROUND

This section introduces aspects that may be helpful in facilitating a better understanding of the invention. Accordingly, the statements of this section are to be read in this light and are not to be understood as admission about what is in the prior art.

5G wireless/mobile access (5G = Fifth Generation) is expected to use MMW frequencies (MMW = Millimeter Wave) to enable multi-Giga bit per second data rates. Therefore, MMW air interfaces may be integrated with a so-called legacy IMT radio communication system (IMT = International Mobile Telecommunications). The legacy IMT radio communication system may be based for example on a future evolution of current LTE networks (LTE = Long Term Evolution) and may provide an area-wide or nation-wide wireless coverage. The MMW air interfaces instead may be primarily applied for patchy wireless coverage at MMW frequencies by using so-called hotspot deployments which means that only specific geographical areas may be covered not only by the legacy IMT radio communication system but also by an MMW radio communication system.

A simple implementation may apply separate MMW base stations which contain either a single MMW transceiver for a single MMW radio cell or which contain several MMW transceivers for providing wireless coverage in several MMW radio cells. An MMW base station may apply a conventional paging mechanism, when data shall be transmitted to a mobile station which is capable to exchange data via an MMW radio link. If the exact location of the mobile station is unknown, a radio communication network containing the MMW base stations may send out paging indications in a certain geographical area. Nevertheless, such a paging procedure typically implies paging messages to be send out over a larger number of MMW radio cells, because due to a high attenuation by gases in the atmosphere a coverage area of an MMW radio cell is much smaller than a coverage area of a conventional LTE radio cell. A further issue with paging messages on MMW links is that beamforming gains are limited, which may lead to rather high radio resource consumption in the MMW radio cells when paging is applied. Furthermore, if the MMW base stations are permanently active and the mobile station MS is permanently scanning to detect possible MMW radio cells both the mobile station and the radio communication system consume a lot of additional electrical energy for operating MMW base stations and MMW transceivers at the mobile stations.

WO 2013/086164 A1 discloses that methods and apparatus for establishment of a millimeter Wave (mmW) link communication include initial selection of candidate mmW Base stations and configuration of mmW acquisition resources and procedures, both with the assistance of the cellular network.

US 2014/0206406 A1 discloses devices, systems and/or methods of establishing a wireless beam formed link.

WO 2013/089733 A1 discloses a system and method for intelligently incorporating a mmWave communication link in a heterogeneous cellular/Wi-Fi networking environment.

### SUMMARY

An object of the embodiments of the invention is how to establish an MMW radio link between a radio communication system and a mobile station and especially how to perform a network-triggered initial access via the MMW radio link by such a mobile station.

The invention is defined by independent claims 1, 9, 11, 12 and 13.

The object is achieved by a network-based method for setting up multiple radio links in a radio communication system as according to claim 1. The network-based method contains receiving from a mobile station via a first radio link which is operated for transmitting and/or receiving radio frequency signals in a first predefined wavelength range capability information for being capable to use a second radio link which is operable to transmit and/or to receive radio frequency signals in a second predefined wavelength range. The network-based method further contains determining to serve the mobile station via the second radio link based on the capability information. The network-based method even further contains transmitting to the mobile station via the first radio link set up information for setting up the second radio link.

The object is further achieved by a network-based sub-system for setting up multiple radio links in a radio communication system as according to claim 12. The network-based sub-system contains a receiver module which is configured to receive from a mobile station via a first radio link which is operated in a first predefined wavelength range capability information for being capable to use a second radio link which is operable in a second predefined wavelength range. The network-based sub-system further contains a processing module which is configured to determine to serve the mobile station by the second radio link based on the capability information. The network-based sub-system even further contains a transmitter module which is configured to transmit to the mobile station via the first radio link set up information for setting up the second radio link.

In a first alternative, a base station may contain the network-based sub-system. In a second alternative, a network node of a core network of the radio communication system may contain the network-based sub-system. In a third alternative, the network-based sub-system may be distributed across two or more than two base stations or across two or more than two network nodes of the core network of the radio communication system or across at least one base station and at least one network node of the core network of the radio communication system. For the distributed alternatives, a first base station or a first core network node may contain for example the receiver module, a second base station or a second core network node may contain for example the processing module and a third base station or a third core network node may contain for example the transmitter module.

The object is even further achieved by a mobile station-based method for setting up multiple radio links in a radio communication system as according to claim 9. The mobile station based method contains a step of transmitting to the radio communication system via a first radio link which is operated in a first predefined wavelength range capability information for being capable to use a second radio link which is operable in a second predefined wavelength range. The mobile station based method even further contains receiving from the radio communication system via the first radio link set up information for setting up the second radio link. The mobile station based method even further contains setting up a connection to the radio communication system via the second radio link triggered by the set up information.

The object is even further achieved by a mobile station for setting up multiple radio links in a radio communication system as according to claim 13. The mobile station contains a transmitter module which is configured to transmit to the radio communication system via a first radio link which is operated in a first predefined wavelength range capability information for being capable to use a second radio link which is operable in a second predefined wavelength range. The mobile station further contains a receiver module which is configured to receive via said first radio link from the radio communication system set up information for setting up the second radio link. The mobile station even further contains a transceiver module which is configured to set up a connection to the radio communication system via the second radio link triggered by the set up information.

The object is even further achieved by a computer program as according to claim 11, having a program code for performing either the network-based method or the mobile station based method, when the computer program is executed on at least one computer, at least one processor, or at least one programmable hardware component.

The embodiments provide a first advantage of not requiring a paging mechanism via radio cells dedicated for the second predefined wavelength range. Instead of using the paging mechanism a location of the mobile station is known from the connection between the mobile station and the radio communication system via the first radio link and from a cell identifier which provides the connection via the first radio link. Thereby, radio resource consumption for paging at radio cells dedicated for the second predefined wavelength range is avoided. The embodiments offer a second advantage of already having knowledge of capabilities of the mobile stations for being served via the second radio link and via the second predefined wavelength range. This means, the radio communication system automatically gets knowledge of the capabilities of those mobile stations, which can be served via the second radio link using the second predefined wavelength range. As a side effect, the radio communication system avoids requesting such capabilities also from mobile stations which are only configured to be operated in the first predefined wavelength range. Further, the embodiments offer a third advantage that searches at the mobile station for radio cells being capable to provide a data communication via the second radio link are assisted by the received set up information and are only triggered when required and useful. Thereby, electrical energy is saved at the mobile station. In addition the radio communication system may faster react to decide that a mobile station is better served by the second predefined wavelength range via the second radio link.

According to the invention, the capability information contains information which frequency range or which at least one carrier frequency is supported by the mobile station in the second predefined wavelength range. Thereby, the radio communication system obtains knowledge which carrier frequencies of the second predefined wavelength range may be used for serving the mobile station.

In a further preferred embodiment, the set up information which is sent from the radio communication system to the mobile station for setting up the second radio link may contain at least one of the following:
- information about at least one carrier frequency to be used for setting up the second radio link,
- at least one cell identifier of at least one radio cell configured to support the second predefined wavelength range,
- at least one system parameter of the at least one radio cell configured to support the second predefined wavelength range,
- information about an access preamble to be used when transmitting a first message via the second radio link.

The at least one system parameter may be for example an allocated frequency bandwidth, multi-antenna transmission modes in use including beamforming, spatial multiplexing or spatial diversity MIMO schemes such as e.g. standardized by 3GPP, or "massive MIMO" schemes as discussed for 5G systems, available modulation and coding schemes, configurations for random access or control signaling, applied signal formats, applied transmit power at the base station for operating the second radio link etc.

When the mobile station receives such kind of information for setting up the second radio link a detection of a radio cell or several radio cells which should be used for setting up the second radio link, downlink synchronization to the radio cell or the radio cells and a transmission of the access preamble can be facilitated and accelerated.

In an even further preferred embodiment, the determining to serve the mobile station by the second radio link may be further based on at least one current operating condition of the radio communication system. Thereby, not only the capability of the mobile station to transmit and/or receive radio frequency signals via the second radio link is considered but also current operating conditions of the radio communication system such as wireless traffic load in a radio cell which provides the first radio link, QoS capabilities (QoS = Quality of Service) of the first radio and the second radio link, processing load at network nodes of the radio communication system etc.

Preferably, the network based method may be applied, when the second predefined wavelength range contains smaller wavelengths than the first predefined wavelength range. For example, the first predefined wavelength range may contain frequencies smaller than 6 GHz and the second predefined wavelength range may contain frequencies larger than 6 GHz. This means, the network based method may be preferably applied when a transmission range of radio frequency signals which are transmitted by a frequency band, by a single frequency subcarrier or by several frequency subcarriers of the second predefined wavelength range are considerably smaller than a transmission range of radio frequency signals which are transmitted by a further frequency band, by a further single frequency subcarrier or by further frequency subcarriers of the first predefined wavelength range. This means also that radio cells operated with the second predefined wavelength range may have a much smaller coverage area than further radio cells which are operated with the first predefined wavelength range.

According to a further preferred embodiment, the first predefined wavelength range may be a primary wavelength range of an IMT radio communication system such as UMTS, LTE, LTE-Advanced or 5G being applied without coverage gaps in an overall coverage of the radio communication system and the second predefined wavelength range may be a secondary millimeter wavelength range being applied at patchy coverage areas of the radio communication system for example by providing multi Giga bit per second data rates only at specific locations of the radio communication system.

In a further embodiment, the network based method further contains monitoring an operational mode of radio equipment of the radio communication system to be used for setting up the second radio link, and transmitting prior to setting up the second radio link information to a network node controlling the radio equipment for switching the radio equipment from a sleep mode to a ready-to-operate mode, when the radio equipment is in said sleep mode. This provides the advantage that the radio equipment which is applied for the second radio link does not need to be in the ready-to-operate mode all the time for saving energy.

With respect to a further preferred embodiment, the network based method further contains transmitting information to the network node controlling the radio equipment for switching the radio equipment from the ready-to-operate mode to the sleep mode, when the second radio link is released and no further mobile stations are served by the radio equipment. The further preferred embodiment provides also the advantage of saving energy by putting the radio equipment which is operated in the second predefined wavelength range in the sleep mode, when currently no mobile stations are served by the radio equipment.

According to a preferred embodiment of the mobile station based method, the capability information comprising information which carrier frequencies are supported by the mobile station in the second predefined wavelength range may be a basic set of capability information and the mobile station based method may further contain transmitting during or after the setting up of the connection via the second radio link a full set of capability information or additional capability information for using the second radio link. The full set of capability information or the additional capability information may contain information about at least one of the following:
- data rates supported via the second radio link,
- bandwidth supported via the second radio link,
- multiple-antenna transmission modes supported via the second radio link.

The preferred embodiment of the mobile station based method enables the radio communication system to get knowledge of all capabilities the mobile station is able to provide via the second radio link and thereby the radio communication system is able to adapt transmission parameters to these capabilities for serving the mobile station in an optimal and efficient way via the second radio link. Further advantageous features of the embodiments of the invention are defined in the dependent claims and are described in the following detailed description.

### BRIEF DESCRIPTION OF THE FIGURES

The embodiments of the invention will become apparent in the following detailed description and will be illustrated by accompanying figures given by way of non-limiting illustrations.
Figure 1 shows schematically a radio communication system for setting up multiple radio links between a mobile station and the radio communication system.
Figure 2 shows schematically a message flow diagram of an overall method for setting up multiple radio links between a mobile station and a radio communication system according to an exemplary embodiment of the invention.
Figure 3 shows schematically a further message flow diagram of an overall method for setting up multiple radio links between a mobile station and a radio communication system according to a further exemplary embodiment of the invention.
Figure 4a and Figure 4b show schematically a flow diagram of a network-based method for setting up multiple radio links between a mobile station and a radio communication system according to an exemplary embodiment of the invention.
Figure 5a and Figure 5b show schematically a flow diagram of a mobile station based method for setting up multiple radio links between a mobile station and a radio communication system according to an exemplary embodiment of the invention.
Figure 6a and Figure 6b show schematically two block diagrams of a network-based subsystem for setting up multiple radio links between a mobile station and a radio communication system according to two exemplary embodiments of the invention.
Figure 7a and Figure 7b show schematically two block diagrams of a mobile station for setting up multiple radio links between a mobile station and a radio communication system according to two exemplary embodiments of the invention.

### DESCRIPTION OF THE EMBODIMENTS

The description and drawings merely illustrate the principles of the invention. All examples recited herein are principally intended expressly to be only for pedagogical purposes to aid the reader in understanding the principles of the invention and the concepts contributed by the inventors to furthering the art, and are to be construed as being without limitation to such specifically recited examples and conditions.

A splitting of processing functions across processing units shown in the Figures is not critical, and as can be understood by those skilled in the art that the number of processing units, the number of processing functions and an allocation of the processing functions to the processing units may vary.

The number of the steps for performing the method(s) is not critical, and as can be understood by those skilled in the art that the number of the steps and the sequence of the steps may vary.

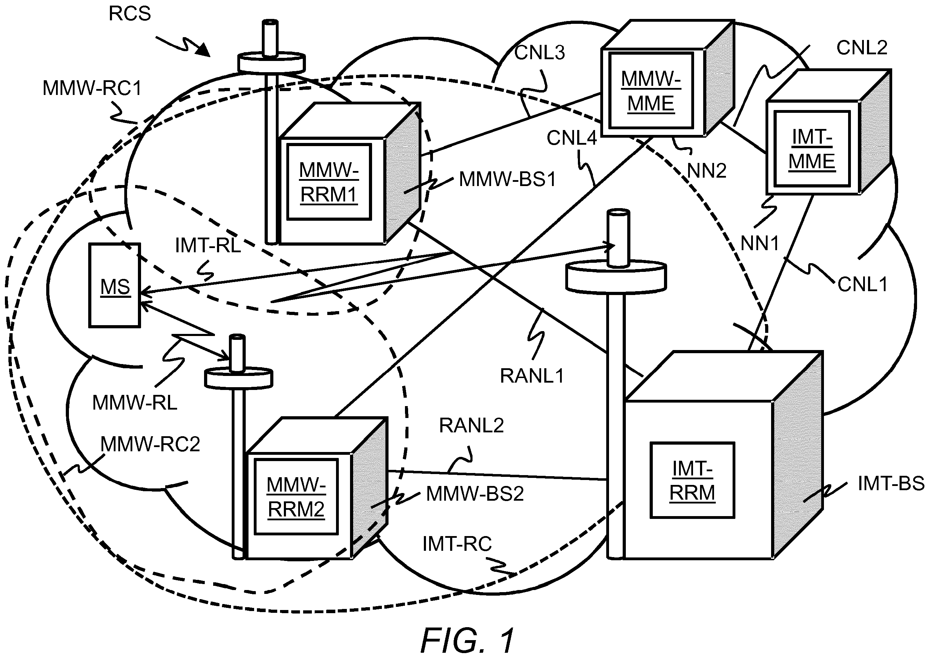

Figure 1 shows schematically a radio communication system RCS for setting up multiple radio links between a mobile station MS and the radio communication system RCS. Further mobile stations are not shown for simplification.

The radio communication system RCS may be for example a single radio communication system based on a single primary radio access technology or an interconnected group of several radio communication systems having a same primary radio access technology or having different primary radio access technologies such as GSM/GPRS (GSM = Global System for Mobile Communication, GPRS = General Packet Radio Service), UMTS (UMTS = Universal Mobile Telecommunication Systems), HSPA (HSPA = High Speed Packet Access), LTE, LTE-Advanced, 5G which all have been or will be standardized by 3GPP (3GPP = Third Generation Partnership Program), WLAN (WLAN = Wireless Local Area Network; based on one of the IEEE 802.11 standards), WiMAX (WiMAX = Worldwide Interoperability for Microwave Access; based on one of the IEEE 802.16 standards for enabling a delivery of last mile wireless broadband access as an alternative to cable and DSL (DSL = Digital Subscriber Line)) or alternatively cdmaOne, CDMA2000, or CDMA2000 EV-DO which are standardized by 3GPP2 (3GPP2 = 3rd Generation Partnership Project 2). The term "mobile station" may be considered synonymous to, and may hereafter be occasionally referred to, as a mobile unit, a mobile user, an access terminal, a UE (UE = user equipment), a subscriber, a user, a cellular telephone, a smart phone, a portable computer, a tablet computer, a pocket computer, a hand-held computer, a PDA (PDA = Personal Digital Assistant), a USB stick (USB = Universal Serial Bus), a smart watch, a head mounted display such as a Google glass or a car-mounted mobile device.

The radio communication system RCS contains an IMT base station IMT-BS. IMT base station means that such a base station applies a radio access technology which complies with at least one of the International Mobile Telecommunications-2000 (IMT-2000) specifications or the IMT-Advanced specification which are defined by the International Telecommunication Union for 3G or 4G mobile communication systems.

The IMT base station IMT-BS and further IMT base stations which are not shown for simplification may be installed for providing an area-wide or nation-wide wireless coverage without any coverage gaps by transmitting and receiving first radio frequency signals which are transmitted by a frequency band, by a single frequency carrier or by several frequency subcarriers of a first predefined wavelength range.

Following description is given with respect to a multi-carrier radio access technology being applied by the IMT base station IMT-BS and the further IMT base station. All embodiments which are described in the following may be alternatively applied for a single-carrier radio access technology or to a radio access technology which applies a continuous frequency band such as in UMTS.

Preferably, the first predefined wavelength range provides frequency subcarriers with a frequency below 6 GHz. Therefore, the IMT base station IMT-BS may apply one of the primary radio access technologies as mentioned above. The IMT base station IMT-BS provides wireless coverage in a radio cell IMT-RC.

The IMT base station IMT-BS contains a radio resource management module IMT-RRM. The radio resource management module IMT-RRM may be responsible for allocation of radio resources for the first radio frequency signals which are transmitted by frequency subcarriers of the first predefined wavelength range. The radio resource management module IMT-RRM may contain a packet scheduler for data packets to be transmitted from the IMT base station IMT-BS and for data packets to be received at the IMT base station IMT-BS.

The radio communication system RCS further contains a first network node NN1 which may be preferably part of a core network of the radio communication system RCS. The first network node NN1 contains a centralized mobility management module IMT-MME. Further distributed management functions such as distributed LTE management functions are located at the IMT base station IMT-BS and at the further IMT base stations which are not shown in Figure 1 for simplification. The mobility management module IMT-MME may be applied for providing mobility functions for the mobile station MS and for further mobile stations when they move across the radio communication system RCS and are connected to various IMT base stations. The mobility management module IMT-MME may be configured to receive handover measurement reports from the mobile station MS and the further mobile stations, to receive traffic load reports from the IMT base station IMT-BS and the further IMT base stations, to instruct the mobile station MS, the further mobile stations, the IMT base station IMT-BS and the further IMT base stations to execute handover and to adapt transmit paths for user data of the mobile station MS and the further mobile stations depended on current serving radio cells of the mobile station MS and the further mobile stations. The first network node NN1 and the IMT base station IMT-BS are interconnected by a network connection CNL1.

According to an alternative embodiment, which is not shown in Figure 1, the mobility management functionality for the mobile station MS and the further mobile stations may be distributed across the IMT base station IMT-BS and the further IMT base stations, which means that each IMT base station may have a mobility management module and the mobility management module of each IMT base station may be responsible for those mobile stations which are currently served by the respective IMT base station.

The radio communication system RCS even further contains a first supporting base station MMW-BS1 and a second supporting base station MMW-BS2. Further supporting base stations are not shown for simplification. The first supporting base station MMW-BS1 and the second supporting base station MMW-BS2 may be located at regions of an overall coverage area of the radio communication system RCS which usually have a considerably higher traffic load than other regions of the overall coverage area of the radio communication system RCS. Such regions with high traffic load may be for example railway stations, bus stops, airports, market squares, sports halls, etc. The first supporting base station MMW-BS1 and the second supporting base station MMW-BS2 are configured to transmit and to receive second radio frequency signals which are transmitted with frequency subcarriers of a second predefined wavelength range.

Following description is given with respect to a multi-carrier radio access technology being applied by the first supporting base station MMW-BS1, the second supporting base station MMW-BS2 and the further supporting base stations. All embodiments which are described in the following may be alternatively applied for a single-carrier radio access technology or to a radio access technology which applies a continuous frequency band such as in UMTS. The radio access technologies for the IMT base station IMT-BS and the further IMT base stations as one group and the first supporting base station MMW-BS1, the second supporting base station MMW-BS2 and the further supporting base stations as a second group may be based on same or different single-carrier, multiple-carrier or continuous frequency band radio access technologies.

Preferably, the second predefined wavelength range provides frequency subcarriers with a frequency above 6 GHz. According to the invention, the second predefined wavelength range is so-called millimeter wavelength range. The first supporting base station MMW-BS1 provides wireless coverage in a first radio cell MMW-RC1 and the second supporting base station MMW-BS2 provides wireless coverage in a second radio cell MMW-RC2.

The first supporting base station MMW-BS1 and the IMT base station IMT-BS may be preferably interconnected by a wireless or a wireline connection RANL1 and the second supporting base station MMW-BS2 and the IMT base station IMT-BS may be preferably interconnected by a further wireless or wireline connection RANL2. The connections RANL1 and RANL2 may provide a functionality for interference management and seamless handover which is similar to the so-called X2 interface between so-called enhanced Node B base stations which have been introduced for the first time by the LTE Release 8 specification.

The first supporting base station MMW-BS1 contains a radio resource management module MMW-RRM1 and the second supporting base station MMW-BS1 contains a radio resource management module MMW-RRM2. The radio resource management modules MMW-RRM1, MMW-RRM2 may be responsible for allocation of radio resources for the second radio frequency signals which are transmitted by frequency subcarriers of the second predefined wavelength range. Each of the radio resource management modules MMW-RRM1, MMW-RRM2 may contain a packet scheduler for data packets to be transmitted from the supporting base stations MMW-BS1, MMW-BS2 and for data packets to be received at the supporting base stations MMW-BS1, MMW-BS2.

Instead of the first supporting base station MMW-BS1 and the second supporting base station MMW-BS2 the radio communication system RCS may contain a first remote radio head connected to the IMT base station IMT-BS and a second remote radio head connected to the IMT base station IMT-BS or connected to a further IMT base station. In such a case, the connections RANL1, RANL2 may be connections which are based on the so-called CPRI (CPRI = Common Public Radio Interface) or so-called radio over fiber transmission techniques may be applied. The first remote radio head and the second remote radio head may be configured to transmit and receive the second radio frequency signals which have frequency subcarriers as part of the second predefined wavelength range. Both radio resource management modules MMW-RRM1, MMW-RRM2 may be combined and located as a single radio resource management module at the IMT base station IMT-BS.

The radio communication system RCS may further contain a second network node NN2 which may be preferably part of the core network of the radio communication system RCS. The second network node NN2 contains a centralized mobility management module MMW-MME. The mobility management module MMW-MME may be applied for providing mobility functions for the mobile station MS and for further mobile stations when they move across the radio communication system RCS and are connected to various supporting base stations such as the first supporting base station MMW-BS1 or the second supporting base station MMW-BS2. The mobility management module MMW-MME may be configured to receive handover measurement reports from the mobile station MS and the further mobile stations, to receive traffic load reports from the supporting base stations MMW-BS1, MMW-BS2, to instruct the mobile station MS and the supporting base stations MMW-BS1, MMW-BS2 to execute handover and to adapt transmit paths for user data of the mobile station MS and the further mobile stations with respect to new serving radio cells of the mobile station MS and of the further mobile stations. The second network node NN1 and the first supporting base station MMW-BS1 are interconnected by a network connection CNL3 and the second network node NN2 and the second supporting base station MMW-BS2 are interconnected by a network connection CNL4. The first network node NN1 and the second network node NN2 are interconnected by a further network connection CNL2.

The mobile station MS has established a first data connection to the radio communication system RCS via a first radio link IMT-RL between the mobile station MS and the antenna system IMT-AS of the IMT base station IMT-BS. When the mobile station MS is in a so-called CONNECTED mode and the mobile station MS moves across the radio communication system RCS, the first radio link IMT-RL may be switched from one IMT base station to a further IMT base station. This switching of the first radio link IMT-RL may be controlled by the mobility management module IMT-MME.

The first radio link IMT-RL may have been set up permanently, when the mobile station MS has entered the radio communication system RCS. Alternatively, the first radio link IMT-RL may be only set up, when user data or signaling data needs to be exchanged between the mobile station MS and the radio communication system RCS.

The mobile station MS transmits for example to the first network node NN1 via the first radio link IMT-RL basic capability information for being capable to use a second radio link MMW-RL which is operable in the second predefined wavelength range. The basic capability information may contain for example information which carrier frequencies are supported by the mobile station MS in the second predefined wavelength range. Such a transmission may be done when the mobile station MS enters the radio communication network RCS or when the mobile station MS changes from a so-called IDLE mode (the mobile station MS has no active radio link and can be located by paging) to a so-called CONNECTED mode (the mobile station MS has at least one active radio link to an IMT base station) or may be done periodically with a predefined period of for example 1 day or may be done when a configuration of a radio transceiver of the mobile station MS which is configured to set up the second radio link has been changed.

The first network node NN1 determines and decides to serve the mobile station MS via the second radio link MMW-RL preferably in addition to serving the mobile station MS via the first radio link IMT-RL. Such a decision is based on the capability information and may be further based on one operating condition or several operating conditions of the radio communication system RCS. Operating conditions may be for example a current data volume which needs to be transmitted to the mobile station MS or needs to be received from the mobile station MS, a current load of the IMT base station IMT-BS, and/or current loads of the supporting base stations MMW-BS1, MMW-BS2, and/or measurement reports from the mobile station MS and/or the IMT base station IMT-BS which contain signal quality parameters such as SINR values (SINR = Signal to Interference and Noise Ratio) of the first radio link IMT-RL and further SINR values of received and measured pilot signals which are transmitted by the supporting base stations MMW-BS1, MMW-BS2.

When the decision has been made that the mobile station MS shall be served via the second radio link MMW-RL and via the second supporting base station MMW-BS2 and preferably in addition to being served via the first radio link IMT-RL, the first network node NN1 transmits to the mobile station MS via the IMT base station IMT-BS and via the first radio link IMT-RL setup information for setting up the second radio link MMW-RL. The setup information for setting up the second radio link MMW-RL may contain for example a cell identifier of the second radio cell MMW-RC2 which the mobile station MS shall use for an initial access via the second radio link MMW-RL. Alternatively, the setup information for setting up the second radio link MMW-RL may contain cell identifiers for two or more radio cells when the mobile station MS is allowed to select a supporting base station or when the mobile station MS is allowed to setup two or more second radio links operated in the second predefined wavelength range. The IMT radio cell IMT-RC usually may have a coverage area, which contains coverage areas of two or more than two supporting base stations. A location of the mobile station MS may be only know on a basis of the IMT radio cell IMT-RC and a more exact location within the IMT radio cell IMT-RC and a next radio cell of the supporting base stations MMW-BS1, MMW-BS2 may be not known. Therefore, cell identifiers of two more radio cells of the supporting base stations may be transmitted to the mobile station MS.

Optionally, the setup information for setting up the second radio link MMW-RL may further contain at least one system parameter of the second radio cell MMW-RC2 or of the several radio cells operated in the second predefined wavelength range. System parameters may be for example allocated bandwidth, multiple antenna transmission mode(s) in use including beamforming, spatial multiplexing or spatial diversity MIMO schemes such as e.g. standardized by 3GPP, or "massive MIMO" schemes as discussed for 5G systems, available modulation and coding schemes, configurations for random access or control signaling, applied transmit power at the supporting base stations MMW-BS1, MMW-BS2 for operating the second radio link.

Optionally, the setup information for setting up the second radio link MMW-RL may further contain information about an access preamble which shall be applied by the mobile station MS for accessing the second supporting base station MMW-BS2 via the second radio link MMW-RL a first time. The information about the access preamble may be for example an index. In such a case, the radio communication system RCS and the mobile station MS may have mapping tables which contain mappings between two or more indices and two or more access preambles.

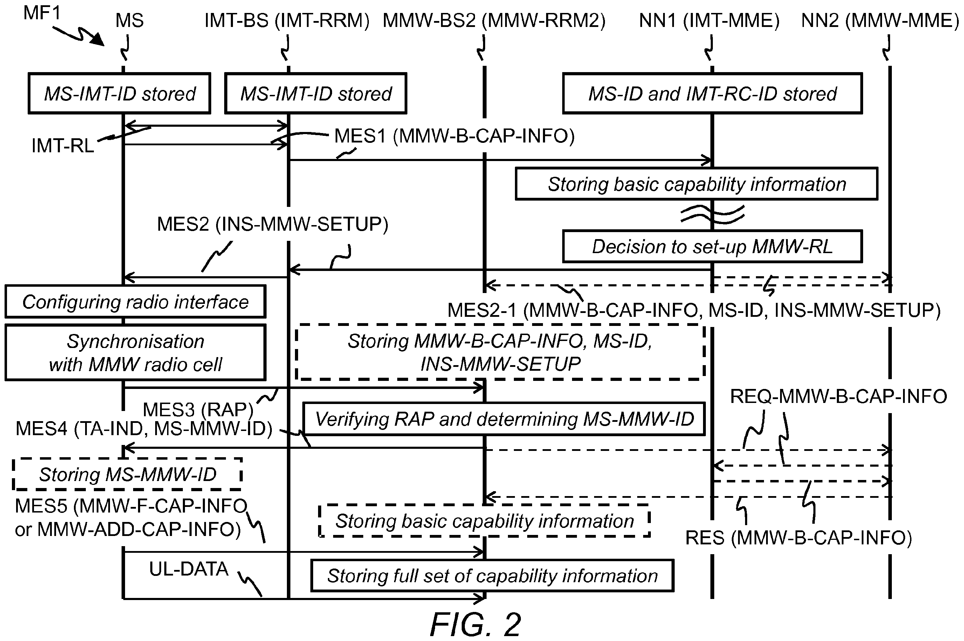

Being triggered by the setup information for setting up the second radio link MMW-RL the mobile station MS gets in contact with the second supporting base station MMW-BS2 for example by applying a random access procedure similar as used in LTE radio communication systems or by applying the access preamble as indicated by the setup information by using a predefined contention-free access time window. By further signaling messages the second radio link MMW-RL may be setup completely. More information about the interworking between the network nodes shown in Figure 1 and about the internal processing of the network nodes shown in Figure 1 is given in the following description with respect to the Figures 2 to 8.

Figure 2 shows schematically a message flow diagram MF1 of an overall method for setting up multiple radio links between the mobile station MS and the radio communication system RCS according to a first exemplary embodiment. The initial situation is characterized by an existing first radio link IMT-RL between the mobile station MS and the IMT base station IMT-BS, by a radio link identifier *MS-IMT-ID* of the mobile station MS being stored at the mobile station MS and the IMT base station IMT-BS and by a so-called core network identifier *MS-ID* of the mobile station MS and by a further identifier *IMT-RC-ID* of the radio cell IMT-RC which are both registered and stored at the mobility management module IMT-MME of the first network node NN1.

The mobile station MS transmits to the mobility management module IMT-MME via the first radio link IMT-RL and via the IMT base station IMT-BS the basic capability information MMW-B-CAP-INFO for being capable to use the second radio MMW-RL which is operable in the second predefined wavelength range. The basic capability information MMW-B-CAP-INFO may be transmitted for example by a container of a first message MES1. When the IMT base station IMT-BS receives the first message MES1, the IMT base station IMT-BS forwards the first message MES1 to the first network node NN1 which contains the mobility management module IMT-MME. When the mobility management module IMT-MME receives the first message MES1, the mobility management module IMT-MME may store the basic capability information MMW-B-CAP-INFO at a storage module of the first network node NN1 for a later usage.

At a later point of time, the mobility management module IMT-MME may decide for example only based on the capability information MMW-B-CAP-INFO that the mobile station MS shall setup the second radio link MMW-RL. In a more advanced alternative, the mobility management module IMT-MME may further base the decision on one or several of the above mentioned operating conditions of the radio communication system RCS. If for example a current load of IMT base station IMT-BS exceeds a predefined load when a further service such as a video download shall start at the mobile station MS, the mobility management module IMT-MME may decide that the mobile station MS shall be mainly served by the second radio link MMW-RL.

Triggered by this decision, the mobility management module IMT-MME may request the identifier *IMT-RC-ID* of the radio cell IMT-RC from the storage module and may use the identifier *IMT-RC-ID* and a mapping table which may be stored at the storage module of the first network node NN1 and which may contain mappings between the radio cell IMT-RC and further radio cells of further IMT base stations and radio cells MMW-RC1, MMW-RC2 of the supporting base stations MMW-BS1, MMW-BS2 and of further supporting base stations to determine and to identify at least one radio cell of the supporting base stations MMW-BS1, MMW-BS2 which is located in a coverage area of the radio cell IMT-RC. Then, the mobility management module IMT-MME transmits the setup information INS-MMW-SETUP for setting up the second radio link MMW-RL to the mobile station MS via the IMT base station IMT-BS and via the first radio link IMT-RL. The information INS-MMW-SETUP may be transmitted for example by a container of a second message MES2. When the IMT base station IMT-BS receives the second message MES2, the IMT base station IMT-BS forwards the second message MES2 via the first radio link IMT-RL to the mobile station MS.

When the setup information INS-MMW-SETUP contains only a cell ID for the second supporting base station MMW-BS2 and thereby the mobile station MS may be implicitly instructed to use this MMW radio cell for setting up the second radio link MMW-RL, the mobility management module IMT-MME may further transmit the basic capability information MMW-B-CAP-INFO, the core network identifier MS-ID, and the setup information INS-MMW-SETUP to the mobility management module MMW-MME. The basic capability information MMW-B-CAP-INFO, the core network identifier *MS-ID,* and the setup information INS-MMW-SETUP may be transmitted for example by a container of a message MES2-1. When the mobility management module MMW-MME receives the message MES2-1, the mobility management module MMW-MME transmits the message MES2-1 to the second supporting base station MMW-BS2 which contains the radio resource management module MMW-RRM2. When the mobility management module MMW-MME receives the message MES2-1, the mobility management module MMW-MME stores the basic capability information MMW-B-CAP-INFO, the core network identifier *MS-ID,* and the setup information INS-MMW-SETUP for example at a storage module of the second supporting base station MMW-BS2.

When the mobile station MS receives the second message MES2, the mobile station MS may use the information INS-MMW-SETUP for configuring a radio transceiver of the mobile station MS and may start sensing or probing for pilot signals transmitted by the second supporting base station MMW-BS2 and for broadcast information transmitted by the second supporting base station MMW-BS2 which contains the cell identifier of the second radio cell MMW-RC2. When the mobile station MS detects the second radio cell MMW-RC2 based on the sensing and the probing, the mobile station MS synchronizes with the second radio cell MMW-RC2 in a conventional way which is known to persons skilled in the art.

When the mobile station MS is synchronized with the second radio cell MMW-RC2, the mobile station MS transmits an access preamble to the second supporting base station MMW-BS2. The access preamble may be transmitted for example as part of a third message MES3. The access preamble may be for example a random access preamble based on well-known random access mechanisms such as known from LTE. Alternatively, the mobile station MS may select based on an indicated index as part of the setup information INS-MMW-SETUP an access preamble for example from a mapping table and may transmit the selected access preamble which is a dedicated access preamble. In such a case the dedicated access preamble may be also define a time slot and or a frequency range to be used for transmitting the access preamble or alternatively, the access preamble may be transmitted in predefined radio resources which are periodically applied for contention-free access. The second supporting base station MMW-BS2 may verify, whether the received access preamble is correct or fits to the index which has been transmitted to the mobile station MS by the setup information INS-MMW-SETUP. When the access of the mobile station MS via the second radio link MMW-RL is accepted at the second supporting base station MMW-BS2, the second supporting base station MMW-BS2 determines an identifier MS-*MMW-ID* for the mobile station MS which shall be applied for the second radio link MMW-RL.

The second supporting base station MMW-BS2 may transmit to the mobile station MS via the second radio link MMW-RL the identifier *MS-MMW-ID* and information TA-IND of a timing advance to be applied by the mobile station MS when accessing the second radio link MMW-RL. The information TA-IND may be transmitted for example by a container of a fourth message MES4. When the mobile station MS receives the fourth message MES4, the mobile station MS stores the identifier *MS-MMW-ID* at a local storage module of the mobile station MS.

When the second supporting base station MMW-BS2 has not yet received any basic capability information of the mobile station MS, according to one alternative, the second supporting base station MMW-BS2 may transmit a request message REQ-MMW-B-CAP-INFO to the second network node NN2, which forwards the request REQ-MMW-B-CAP-INFO to the first network node NN1. When the first network node NN1 receives the request REQ-MMW-B-CAP-INFO, the first network node NN1 transmits a response message RES which contains the basic capability information MMW-B-CAP-INFO to the second network node NN2, which may forward the response message RES to the second supporting base station MMW-BS2 which stores the basic capability information MMW-B-CAP-INFO. In such a case, the mobile station MS may transmit preferably but not necessarily to the radio resource management module MMW-RRM2 as part of the second supporting base station MMW-BS2 via the second radio link MMW-RL additional capability information MMW-ADD-CAP-INFO which was not part of the basic capability information MMW-B-CAP-INFO. Thereby, a full set of capability information is obtained and stored at the second supporting base station MMW-BS2.

In a further alternative, when the basic capability information MMW-B-CAP-INFO is not requested and received from the first network node NN1, a full set of capability information MMW-F-CAP-INFO may be transmitted from the mobile station MS via the second radio link MMW-RL to the second supporting base station MMW-BS2.

The full set of capability information MMW-F-CAP-INFO or the additional capability information MMW-ADD-CAP-INFO may contain for example information about supported carrier frequencies on the second radio link MMW-RL and/or information about supported data rates on the second radio link MMW-RL, and/or information about supported frequency bandwidth on the second radio link MMW-RL, and/or information about supported multiple antenna transmission modes including beamforming, spatial multiplexing or spatial diversity MIMO schemes such as e.g. standardized by 3GPP, or "massive MIMO" schemes as discussed for 5G systems via the second radio link MMW-RL. The full set of capability information MMW-F-CAP-INFO or the additional capability information MMW-ADD-CAP-INFO may be transmitted for example by a container of fifth message MESS. The full set of capability information MMW-F-CAP-INFO is applied by the radio resource management module MMW-RRM2 for serving the mobile station MS via the second radio link MWW-RL preferably with an optimized spectral efficiency.

The mobile station MS may further transmit uplink data UL-DATA via the second radio link MMW-RL to the second supporting base station MMW-BS2 preferably while maintaining the first radio link IMT-RL for example in an LTE transmission mode.

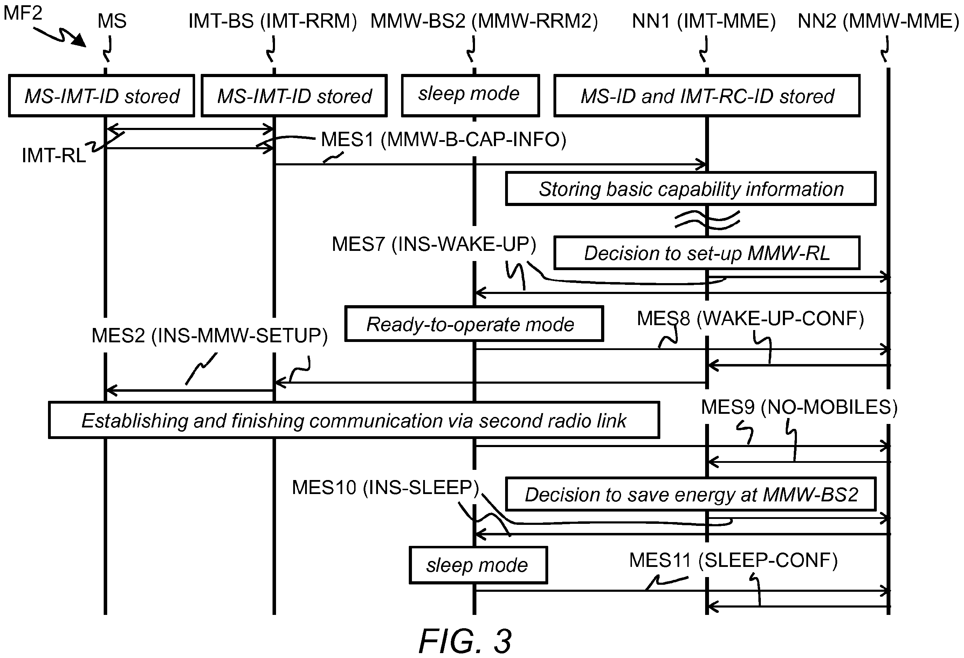

Figure 3 shows schematically a further message flow diagram MF2 of an overall method for setting up multiple radio links between the mobile station MS and the radio communication system RCS according to a further exemplary embodiment. For simplification only the differences between the message flow diagram MF1 shown in Figure 2 and the further message flow diagram MF2 are described in the following.

With respect to the embodiment shown in Figure 2 the radio cells MMW-RC1, MMW-RC2 may be continuously operated without saving any electrical energy. In contrast to the embodiment of Figure 2, for the embodiment with respect to Figure 3 the first network node NN1 may be configured to control operational modes of the supporting base stations MMW-BS1, MMW-BS2. As part of the initial situation which is already described with respect to the message flow diagram MF1, the second supporting base station MMW-BS2 may be in a sleep mode which means that an energy consumption of the second supporting base station MMW-BS2 is largely reduced by switching off those modules of the second supporting base station MWW-BS2 such as radio transceivers modules or processing modules which only need to be operated when mobile stations are served by the second supporting base station MWW-BS2.

When the mobility management module IMT-MME has decided to serve the mobile station MS via the second radio link MMW-RL and via the second supporting base station MMW-BS2, the first network node NN1 may transmit to the second supporting base station MWW-BS2 for example via the second network node NN2 information INS-WAKE-UP for switching the second supporting base station MWW-BS2 from the sleep mode to a ready-to-operate mode. The information INS-WAKE-UP may be transmitted for example by a container of an instruction message MES7. The second supporting base station MMW-BS2 which receives the instruction message MES7 uses the instruction message MES7 as a trigger to switch the second supporting base station MWW-BS2 from the sleep mode to the ready-to-operate mode. When the second supporting base station MMW-BS2 has been put in the ready-to-operate mode, the second supporting base station MMW-BS2 transmits to the first network node NN1 for example via the second network node NN2 information WAKE-UP-CONF for indicating that the second supporting base station MWW-BS2 is ready to serve mobile stations. The information WAKE-UP-CONF may be transmitted for example by a container of a confirmation message MES8.

In the following, the messages for establishing the second radio link MMW-RL beginning with the second message MES2 are transmitted and corresponding procedures at involved network nodes are executed (see Figure 2 and corresponding description). When no more data need to be transmitted via the second radio link MMW-RL the second radio link MMW-RL may be preferably released and the communication via the second supporting base station MMW-BS2 is finished.

When no further mobile stations are served by the second supporting base station MMW-BS2, the second supporting base station MMW-BS2 may transmit to the first network node NN1 for example via the second network node NN2 information NO-MOBILES that currently no mobile stations are served by the second supporting base station MMW-BS2. The information NO-MOBILES may be transmitted for example by a container of an indication message MES9. When the first network node NN1 receives the indication message MES9, the first network node NN1 may determine or may decide that energy consumption should be reduced at the second supporting base station MMW-BS2 and therefore, the first network node NN1 may transmit to the second supporting base station MMW-BS2 for example via the second network node NN2 information INS-SLEEP for setting the second supporting base station MMW-BS2 into the sleep mode. The information INS-SLEEP may be transmitted for example by a container of a further instruction message MES10.

The second supporting base station MMW-BS2 which receives the further instruction message MES10 uses the further instruction message MES10 as a trigger to switch the second supporting base station MWW-BS2 from the ready-to-operate mode to the sleep mode. When the second supporting base station MMW-BS2 has been put in the sleep mode, the second supporting base station MMW-BS2 may transmit to the first network node NN1 for example via the second network node NN2 information SLEEP-CONF for indicating that the second supporting base station MWW-BS2 is put to the sleep mode. The information SLEEP-CONF may be transmitted for example by a container of a further confirmation message MES11.

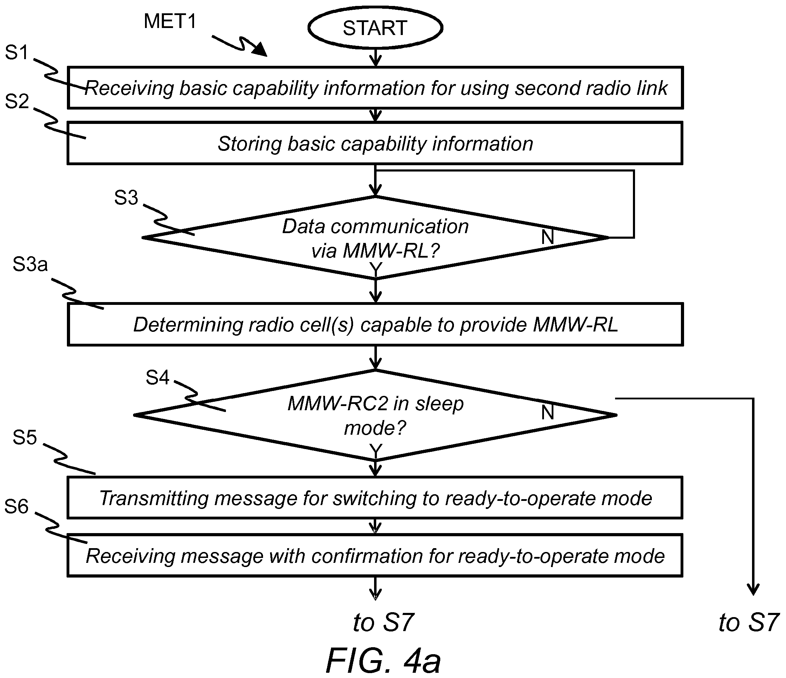

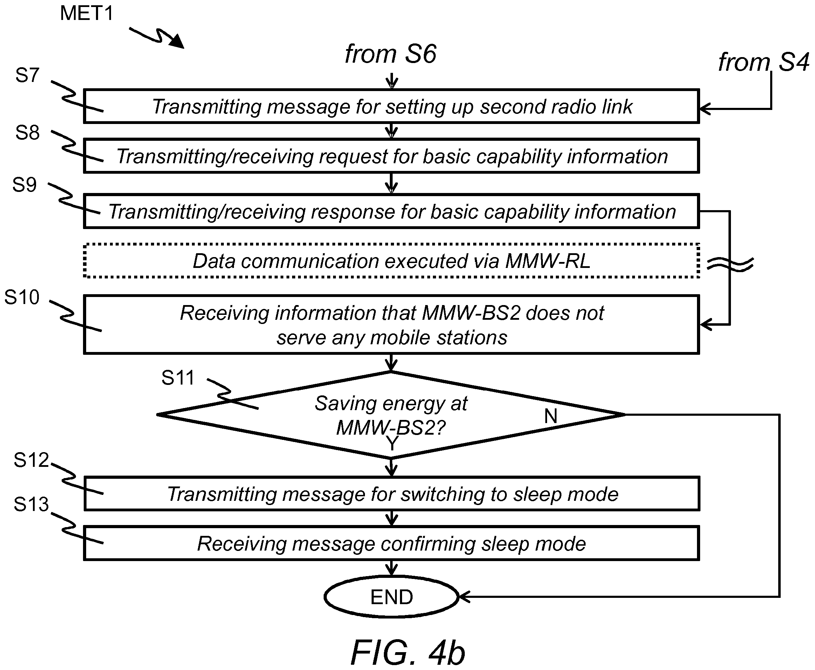

Figure 4a and Figure 4b show schematically a flow diagram of a network based method MET1 for setting up multiple radio links between the mobile station MS and the radio communication system RCS according to an exemplary embodiment.

In a first step S1, the first message MES1 which contains the basic capability information MMW-B-CAP-INFO is received.

In a next step S2, the basic capability information MMW-B-CAP-INFO is stored for example at the storage module of the first network node NN1.

By a further step S3, it may be verified whether a data communication via the second radio link MMW-RL may be setup for the mobile station MS. The verification may be for example only based on the fact, whether the mobile station MS is capable to setup the second radio link MMW-RL in the second predefined wavelength range. In further advanced alternative embodiments, the verification may be further based on one operating condition or on several operating conditions of the radio communication system RCS such as a current traffic load in the radio communication system RCS or a pending data demand for the mobile station MS, or a new service to be started at the mobile station MS such as a video download. When it has been decided, that no such data communication via the second radio link MMW-RL should be done, the step S3 may be repeated for example with a time period of 1 second or 1 minute. When else it has been determined or decided that a data communication via the second radio link MMW-RL should be done, step S3a may be a next step.

During step S3a, the mobility management module IMT-MME may request the identifier *IMT-RC-ID* of the radio cell IMT-RC from the storage module and may use the identifier *IMT-RC-ID* and the mapping table which contains the mappings between the radio cells of IMT base stations and radio cells MMW-RC1, MMW-RC2 of the supporting base stations MMW-BS1, MMW-BS2 to determine and to identify at least one radio cell of the supporting base stations MMW-BS1, MMW-BS2 which is located in the coverage area of the radio cell IMT-RC.

In a next step S4, it may be verified whether the second radio cell MMW-RC2 or the second supporting base station MMW-BS2 is currently in the sleep mode. When it has been detected, that the second radio cell MMW-RC2 or the second supporting base station MMW-BS2 is currently in the sleep mode, step S5 may be a following step. When it has been detected, that the second radio cell MMW-RC2 or the second supporting base station MMW-BS2 is not currently in the sleep mode, step S7 may be a following step.

By the following step S5, the instruction message MES7 is transmitted to the second supporting base station MMW-BS2.

In a further step S6, the confirmation message MES8 is received.

In a next step S7, the second message MES2 is transmitted via the IMT base station IMT-BS to the mobile station MS.

In further steps S8, the request REQ-CAP-INFO for the basic capability information may be transmitted from and received at network nodes of the radio communication system RCS.

By next steps S9 the message MES2-1 or the response RES which contains the capability information MMW-B-CAP-INFO is transmitted from and received at network nodes of the radio communication system RCS.

Then, the data communication between the mobile station MS and the radio communication system RCS is executed via the second radio link MMW-RL.

When the data communication is finished, in a next step S10, the message MES9 may be received that the second supporting base station MMW-BS2 or that the second radio cell MMW-RC2 does not serve any mobile stations.

By a further step S11 it may be verified whether energy consumption shall be saved at the second supporting base station MMW-BS2. When it has been determined or decided, that energy shall be saved at the second supporting base station MMW-BS2, step S11 may be a following step. When else it has been determined or decided, that no energy shall be saved at the second supporting base station MMW-BS2 the method MET1 may end.

By the following step S12, the message MES10 is transmitted to the second supporting base station MMW-BS2.

In a next step S13, the message MES11 is received from the second supporting base station MMW-BS2.

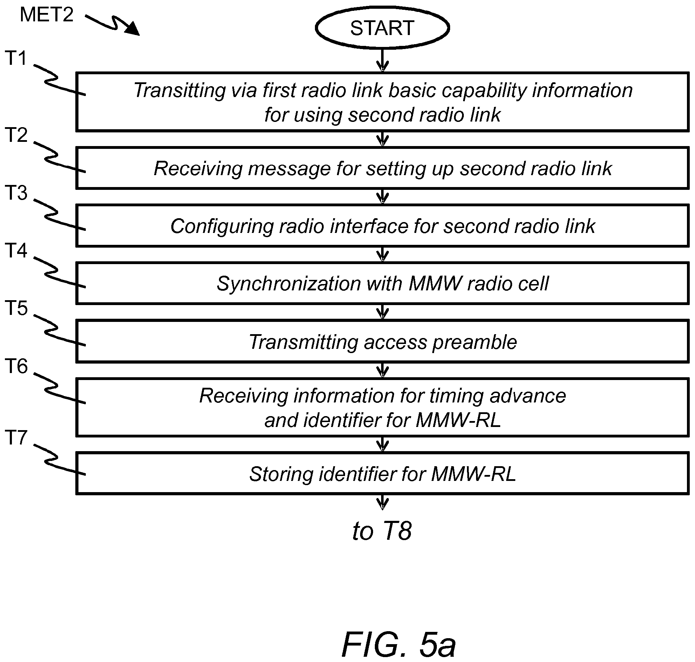

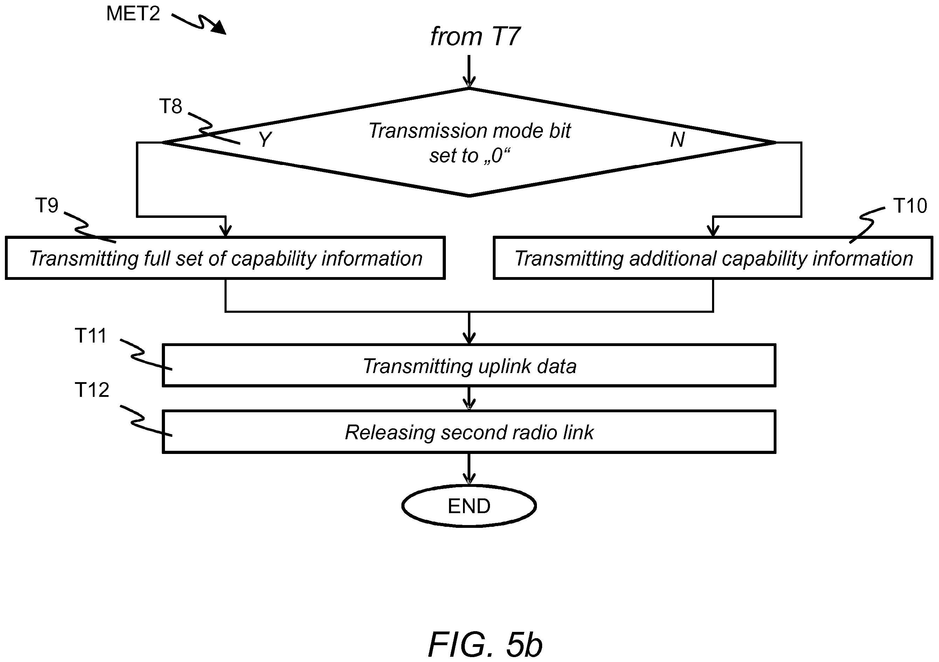

Figure 5a and Figure 5b show schematically a flow diagram of a mobile station based method MET2 for setting up multiple radio links between the mobile station MS and the radio communication system RCS according to an exemplary embodiment.

In a first step T1, the mobile station MS transmits the message MES1 which contains the capability information MMW-B-CAP-INFO via the first radio link IMT-RL and via the IMT base station IMT-BS to the mobility management module IMT-MME.

In a further step T2, the mobile station MS receives from the mobility management module IMT-MME via the first radio link IMT-RL and via the IMT base station IMT-BS the message MES2 which contains the information INS-MMW-SETUP for setting up the second radio link MMW-RL.

By a next step T3, the mobile station MS applies the information INS-MMW-SETUP for configuring a radio interface of the mobile station MS which shall be used for setting up the second radio link MMW-RL.

In a further step T4, the mobile station MS performs sensing and probing for the broadcasted cell ID of the radio cell MMW-RC2, detects the radio cell MMW-RC2 based on this sensing or probing and executes the synchronization with the radio cell MMW-RC2.

By a further step T5, the mobile station MS transmits the access preamble RAP to the second supporting base station MMW-BS2 via the second radio link MMW-RL.

In a next step T6, the mobile station MS receives the message MES4 which contains the information TA-IND of the timing advance to be applied by the mobile station MS when accessing the second radio link MMW-RL and which further contain the identifier MS-MMW-ID for the second radio link MMW-RL.

In a further step T7, the mobile station MS stores the identifier MS-MMW-ID at the local storage module.

By a further step T8, the mobile station MS may verify which transmission mode is configured at the mobile station MS to transmit further capability information. A first transmission mode for transmitting the full set of capability information for operating the second radio link MMW-RL may be labeled by setting for example a transmission mode bit to "0". A second transmission mode for transmitting the additional capability information for operating the second radio link MMW-RL may be labeled by setting for example the transmission mode bit to "1". When the mobile station MS determines or verifies that the transmission mode bit is set to "0" step T9 may be a next step. When else the mobile station MS determines or verifies that the transmission mode bit is not set to "0" step T10 may be a further step.

Using the step T9, the mobile station MS transmits the message MES5 which contains the full set of capability information MMW-F-CAP-INFO. Alternatively using the step T10, the mobile station MS transmits the message MES5 which contains the additional capability information MMW-ADD-CAP-INFO.

In a next step T11, the mobile station MS transmits the uplink data UL-DATA via the second radio link MMW-RL to the radio communication system RCS. The mobile station MS may also receive downlink data via the second radio link MMW-RL.

In a further step T12, the mobile station MS may release the second radio link MMW-RL when for example a service or an app which is executed at the mobile station MS does not require a specific data rate any more.

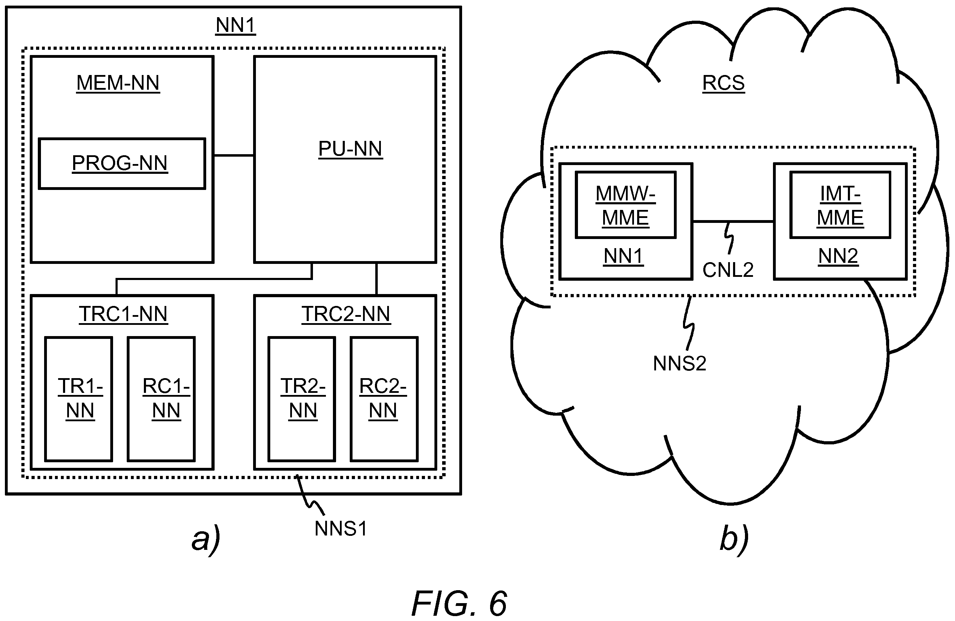

Figure 6a and Figure 6b show schematically two block diagrams of a network subsystem NNS1 and a further network subsystem NNS2 for setting up multiple radio links between the mobile station MS and the radio communication system RCS according to two exemplary embodiments.

According to Figure 6a, the network subsystem NNS1 may be implemented in a single network node of the radio communication system RCS such as implemented in the first network node NN1.

The network subsystem NNS1 contains a first transceiver module TRC1-NN which may be configured to connect via the network connection CNL1 to the IMT base station IMT-BS. The first transceiver module TRC1-NN may contain a transmitter sub-module TR1-NN which is configured to transmit messages to the IMT base station IMT-BS and a receiver sub-module RC1-NN which is configured to receive further messages from the IMT base station IMT-BS.

The network subsystem NNS1 further contains a second transceiver module TRC2-NN which may be configured to connect via the network connection CNL2 to the second network node NN2. The second transceiver module TRC2-NN may contain a transmitter sub-module TR2-NN which is configured to transmit messages to the mobility management module MMW-MME and a receiver sub-module RC2-NN which is configured to receive further messages from the mobility management module MMW-MME.

The transmitter modules TR1-NN, TR2-NN may contain typical transmitter components, such as filter or filter circuitry, an amplifier such as a Power Amplifier (PA), conversion circuitry for converting a base band signal to a transmission signal, a digital/analogue converter, or signal processing capability such as DSP (DSP = Digital signal processor). The receiver modules RC1-NN, RC2-NN may correspond to one or more receiver devices, one or more receiver units, or any means for receiving. The receiver modules RC1-NN, RC2-NN may therefore comprise typical receiver components, such as filter or filter circuitry, an amplifier such as an LNA (LNA = Low Noise Amplifier), conversion circuitry for converting a received transmission signal to a base band signal, an analog/digital converter, or signal processing capability such as a DSP.

The network subsystem NNS1 even further contains a memory module MEM-NN. The memory module MEM-NN is configured to store a computer program PROG-NN for operating a processing module PU-NN by executing the method MET1. The memory module MEM-NN is further configured to store for example the capability information MMW-B-CAP-INFO.

The network subsystem NNS1 even further contains the processing module PU-NN. The processing module PU-NN is configured to operate the network subsystem NNS1 by executing the method MET1.

With respect to Figure 6b, the network subsystem NNS2 may be distributed across at least two network nodes of the radio communication system RCS such as distributed across the first network node NN1 and the second network node NN2 which are interconnected by the network connection CNL2. The network subsystem NNS2 is configured to execute the steps of the method MET1.

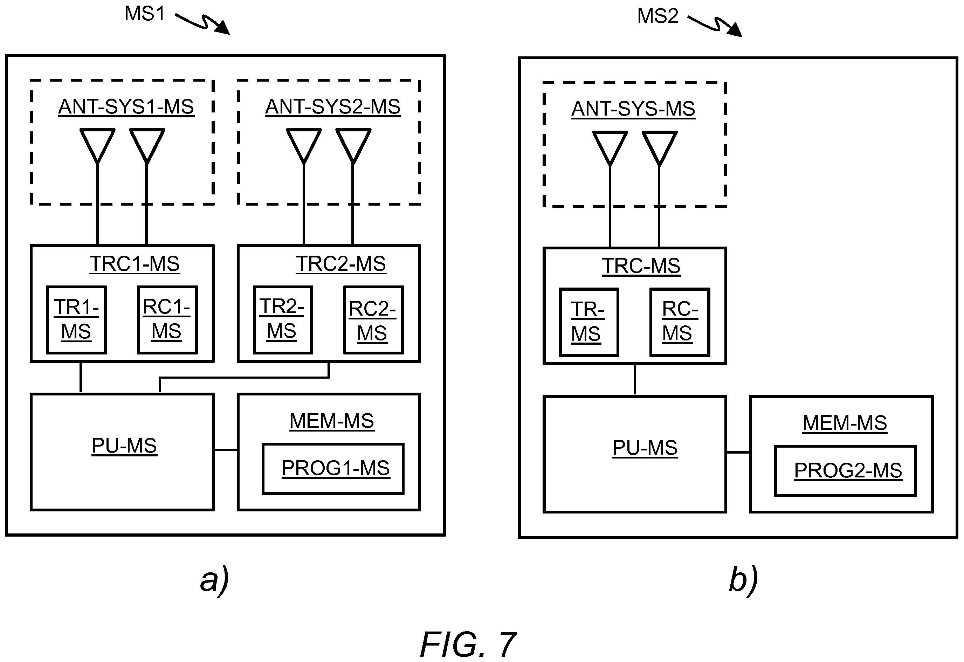

Figure 7a and Figure 7b show schematically two block diagrams of a mobile station MS1 and of a further mobile station MS2 for setting up multiple radio links between one of the mobile stations MS1, MS2 and the radio communication system RCS according to two exemplary embodiments. The mobile station MS which is shown in Figure 1 to Figure 3 may be implemented according to structural elements of one of the mobile stations MS1, MS2.

According to Figure 7a, the mobile station MS1 contains a first transceiver module TRC1-MS which is configured to connect via the first radio link IMT-RL to the IMT base station IMT-BS. The first transceiver module TRC1-MS may contain a transmitter sub-module TR1-MS which is configured to transmit messages to the IMT base station IMT-BS and a receiver sub-module RC1-MS which is configured to receive further messages from the IMT base station IMT-BS.

The mobile station MS1 further contains a second transceiver module TRC2-MS which is configured to connect via the second radio link MMW-RL to the second supporting base station MMW-BS2. The second transceiver module TRC2-MS may contain a transmitter sub-module TR2-MS which is configured to transmit messages to the second supporting base station MMW-BS2 and a receiver sub-module RC2-MS which is configured to receive further messages from the second supporting base station MMW-BS2.

The transmitter modules TR1-MS, TR2-MS may contain typical transmitter components, such as filter or filter circuitry, an amplifier such as a Power Amplifier (PA), conversion circuitry for converting a base band signal to an RF signal (RF = Radio Frequency), a digital/analogue converter, or signal processing capability such as DSP (DSP = Digital signal processor). The receiver modules RC1-MS, RC2-MS may correspond to one or more receiver devices, one or more receiver units, or any means for receiving. The receiver modules RC1-MS, RC2-MS may therefore comprise typical receiver components, such as filter or filter circuitry, an amplifier such as an LNA (LNA = Low Noise Amplifier), conversion circuitry for converting a received RF signal to a base band signal, an analog/digital converter, or signal processing capability such as a DSP.

The mobile station MS1 even further contains a first antenna system ANT-SYS1-MS which is connected to the first transceiver module TRC1-MS and even further contains a second antenna system ANT-SYS2-MS which is connected to the second transceiver module TRC2-MS. Both antenna systems ANT-SYS1-MS, ANT-SYS2-MS may contain two or more antenna elements as shown in Figure 7a for being able to operate the transceiver modules TRC1-MS, TRC2-MS with one or several multi-antenna transmission modes including beamforming, spatial multiplexing or spatial diversity MIMO schemes such as e.g. standardized by 3GPP, or "massive MIMO" schemes as discussed for 5G systems. In a further alternative, one of the antenna systems ANT-SYS1-MS, ANT-SYS2-MS may contain a single antenna element and a further one of the antenna systems ANT-SYS1-MS, ANT-SYS2-MS may contain two or more antenna elements. In an even further alternative, both antenna systems ANT-SYS1-MS, ANT-SYS2-MS may contain only a single antenna element.

The mobile station MS1 even further contains a memory module MEM-MS. The memory module MEM-MS is configured to store a computer program PROG1-MS for operating a processing module PU-MS by executing the steps of the method MET2. The memory module MEM-MS is further configured to store for example the capability information MMW-B-CAP-INFO, the full set of capability information MMW-F-CAP-INFO and/or the additional capability information MMW-ADD-CAP-INFO.

The mobile station MS1 even further contains the processing module PU-MS. The processing module PU-MS is configured to operate the mobile station MS1 by executing the steps of the method MET2.

With respect to Figure 7b, the mobile station MS2 contains in comparison to the mobile station MS1 a single transceiver module TRC-MS which is configured to connect via the first radio link IMT-RL to the IMT base station IMT-BS and which is further configured to connect via the second radio link IMT-RL to the second supporting base station MMW-BS2. The transceiver module TRC-MS may be for example a software defined radio interface which can be reconfigured in a short time range of millisecond or seconds from a first radio access technology which is applied for the first radio link IMT-RL to a second radio access technology which is applied for the second radio link MMW-RL and which can be reconfigured backwards. The transceiver module TRC-MS may contain a transmitter sub-module TR-MS which is configured to transmit messages to the IMT base station IMT-BS or to the second supporting base station MMW-BS2 and a receiver sub-module RC-MS which is configured to receive further messages from the IMT base station IMT-BS or from the second supporting base station MMW-BS2.

In comparison to the mobile station MS1, the mobile station MS2 may further contain a single antenna system ANT-SYS-MS such as an ultra wideband planar monopole antenna which is designed to be used for cognitive radio applications.

Further modules of the mobile station MS2 may be similar to the further modules of the mobile station MS1 such as the memory module MEM-MS and the processing module PU-MS. The memory module MEM-MS is configured to store a computer program PROG2-MS which is adapted to the single transceiver architecture of the mobile station MS2 and which is configured to operate the processing module PU-MS by executing the steps of the method MET2.

The description and drawings merely illustrate the principles of the invention. All examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions.

Functional blocks denoted as "means for performing a certain function" shall be understood as functional blocks comprising circuitry that is adapted for performing the certain function, respectively. Hence, a "means for something" may as well be understood as a "means being adapted or suited for something". A means being adapted for performing a certain function does, hence, not imply that such means necessarily is performing said function (at a given time instant).

Functions of various elements shown in the figures, including any functional blocks may be provided through the use of dedicated hardware, as e.g. a processor, as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, DSP hardware, network processor, ASIC, FPGA, read only memory (ROM) for storing software, random access memory (RAM), and non-volatile storage. Other hardware, conventional and/or custom, may also be included.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

It is further to be noted that the methods MET1, MET2 disclosed in the specification or in the claims may be implemented by a device having means for performing each of the respective steps of these methods. Preferably, a computer program product may contain computer-executable instructions for performing the methods MET1, MET2, when the computer program product is executed on a programmable hardware device such as a DSP, an ASIC or an FPGA. Preferably, a digital data storage device may encode a machine-executable program of instructions to perform the methods MET1, MET2. Further, it is to be understood that the disclosure of multiple steps or functions disclosed in the specification or claims may not be construed as to be within the specific order. Therefore, the disclosure of multiple steps or functions will not limit these to a particular order unless such steps or functions are not interchangeable for technical reasons. Furthermore, in some embodiments a single step may include or may be broken into multiple sub steps. Such sub steps may be included and part of the disclosure of this single step unless explicitly excluded.

## Claims

1. A network-based method (MET1) for setting up multiple radio links in a radio communication system (RCS) comprising:
- receiving (S1) from a mobile station (MS) via a first radio link (IMT-RL) operated in a first predefined wavelength range capability information (MMW-B-CAP-INFO) for being capable to use a second radio link (MMW-RL) operable in a second predefined wavelength range, which is a millimeter wavelength range,
- determining (S3) to serve said mobile station (MS) by said second radio link (MMW-RL) based on said capability information (MMW-B-CAP-INFO), and
- transmitting (S7) to said mobile station (MS) via said first radio link (IMT-RL) set up information (INS-MMW-SETUP) for setting up said second radio link (MMW-RL);
**characterised in that** said capability information (MMW-B-CAP-INFO) comprises information which frequency range or which at least one carrier frequency of said second predefined wavelength range is supported by said mobile station (MS).

2. The method (MET1) according to claim 1, wherein said set up information (INS-MMW-SETUP) for setting up said second radio link (MMW-RL) comprises at least one of the following:
- information about at least one carrier frequency to be used for setting up said second radio link (MMW-RL),
- at least one cell identifier of at least one radio cell configured to support said second predefined wavelength range,
- at least one system parameter of said at least one radio cell configured to support said second predefined wavelength range,
- information about an access preamble to be used when transmitting a first message via said second radio link (MMW-RL).

3. The method (MET1) according to any of the preceding claims, wherein said determining (S3) is further based on at least one current operating condition of said radio communication system (RCS).

4. The method (MET1) according to any of the preceding claims, wherein said second predefined wavelength range comprises smaller wavelengths than said first predefined wavelength range.

5. The method (MET1) according to claim 4, wherein said first predefined wavelength range comprises frequencies smaller than 6 GHz and wherein said second predefined wavelength range comprises frequencies larger than 6 GHz.

6. The method (MET1) according to claim 5, wherein said first predefined wavelength range is a primary wavelength range of an International Mobile Telecommunications -IMT- radio communication system being applied in an area-wide coverage area without coverage gaps of said radio communication system (RCS) and wherein said second predefined wavelength range is a millimeter wavelength range being applied at patchy coverage areas covering only specific locations (MMW-RC1, MMW-RC2) of said radio communication system (RCS).

7. The method (MET1) according to any of the preceding claims, wherein said method (MET-IMT-MME) further comprises:
- monitoring (S4) an operational mode of a radio equipment of said radio communication system (RCS) to be used for setting up said second radio link (MMW-RL), the operational mode comprising a sleep mode, and
- transmitting (S5) prior to setting up said second radio link (MMW-RL) information (MES7) to a network node (BS, MMW-BS) controlling said radio equipment for switching said radio equipment from a sleep mode to a ready-to-operate mode, when said radio equipment is in said sleep mode.

8. The method (MET1) according to claim 7, wherein said method (MET-IMT-MME) further comprises transmitting (S11) information (MES10) to said radio equipment for switching said radio equipment from said ready-to-operate mode to said sleep mode, when said second radio link (RL2) is released and no further mobile stations are served by said radio equipment.

9. A mobile station-based method (MET2) for setting up multiple radio links in a radio communication system (RCS) comprising:
- transmitting (T1) to said radio communication system (RCS) via a first radio link (IMT-RL) operated in a first predefined wavelength range capability information (MMW-B-CAP-INFO) for being capable to use a second radio link (MMW-RL) operable in a second predefined wavelength range, which is a millimeter wavelength range, and wherein said capability information (MMW-B-CAP-INFO) comprises information which frequency range or which at least one carrier frequency of said second predefined wavelength range is supported by said mobile station (MS),
- receiving (T2) from said radio communication system (RCS) via said first radio link (IMT-RL) set up information (INS-MMW-SETUP) for setting up said second radio link (MMW-RL), and
- setting up (T4, T5, T6) a connection to said radio communication system (RCS) via said second radio link (MWW-RL) triggered by said set up information (INS-MMW-SETUP.

10. The method (MET2) according to claim 9, wherein said capability information (MMW-B-CAP-INFO) is a basic set of capability information comprising information which carrier frequencies are supported by the mobile station (MS) in the second predefined wavelength range, and wherein said method (MET-MS) further comprises transmitting (T8, T9) during or after said setting up (T4, T5, T6) of said connection via said second radio link (MWW-RL) a full set of capability information (MMW-F-CAP-INFO) or additional capability information (MMW-EXT-CAP-INFO) for using said second radio link (MMW-RL);
wherein said full set of capability information (MMW-F-CAP-INFO) or said additional capability information (MMW-EXT-CAP-INFO) comprises information about at least one of the following:
- data rates supported via said second radio link (MMW-RL),
- bandwidth supported via said second radio link (MMW-RL),
- multiple-antenna transmission modes supported via said second radio link (MMW-RL).

11. A computer program having a program code for performing a method (MET1, MET2) according to any of the preceding claims, when the computer program is executed on at least one computer, at least one processor, or at least one programmable hardware component.

12. A network-based sub-system (NNS1, NNS2) for setting up multiple radio links in a radio communication system (RCS) comprising:
- a receiver module (RC1-NN, NN1) configured to receive from a mobile station (MS) via a first radio link (IMT-RL) operated in a first predefined wavelength range capability information (MMW-B-CAP-INFO) for being capable to use a second radio link (MMW-RL) operable in a second predefined wavelength range, which is a millimeter wavelength range,
- a processing module (PU-NN, NN1) configured to determine to serve said mobile station (MS) by said second radio link (MMW-RL) based on said capability information (MMW-B-CAP-INFO), and
- a transmitter module (TR1-NN, NN1) configured to transmit to said mobile station (MS) via said first radio link (IMT-RL) set up information (INS-MMW-SETUP) for setting up said second radio link (MMW-RL);
**characterised in that** said capability information (MMW-B-CAP-INFO) comprises information which frequency range or which at least one carrier frequency of said second predefined wavelength range is supported by said mobile station (MS).

13. A mobile station (MS, MS1, MS2) for setting up multiple radio links in a radio communication system (RCS) comprising:
- a transmitter module (TR1-MS, TR-MS) configured to transmit to said radio communication system (RCS) via a first radio link (IMT-RL) operated in a first predefined wavelength range capability information (MMW-B-CAP-INFO) for being capable to use a second radio link (MMW-RL) operable in a second predefined wavelength range, which is a millimeter wavelength range, and wherein said capability information (MMW-B-CAP-INFO) comprises information which frequency range or which at least one carrier frequency of said second predefined wavelength range is supported by said mobile station (MS),
- a receiver module (RC1-MS, RC-MS) configured to receive from said radio communication system (RCS) via said first radio link (IMT-RL) set up information (INS-MMW-SETUP) for setting up said second radio link (MMW-RL), and
- a transceiver module (TRC2-MS, TRC-MS) configured to set up a connection to said radio communication system (RCS) via said second radio link (MWW-RL) triggered by said set up information (INS-MMW-SETUP).

## Patentansprüche

1. Netzbasiertes Verfahren (MET1) zum Aufbauen mehrerer Funkverbindungen in einem Funkkommunikationssystem (RCS), das Folgendes umfasst:
- Empfangen (S1) von einer Mobilstation (MS) mittels einer ersten Funkverbindung (IMT-RL), die in einem ersten im Voraus definierten Wellenlängenbereich betrieben wird, von Leistungsfähigkeitsinformationen (MMW-B-CAP-INFO), um in der Lage zu sein, eine zweite Funkverbindung (MMW-RL), die in einem zweiten im Voraus definierten Wellenlängenbereich, der ein Millimeterwellenlängenbereich ist, betreibbar ist, zu verwenden,
- Bestimmen (S3) auf der Grundlage der Leistungsfähigkeitsinformationen (MMW-B-CAP-INFO), die Mobilstation (MS) durch die zweite Funkverbindung (MMW-RL) zu bedienen, und
- Senden (S7) zur Mobilstation (MS) mittels der ersten Funkverbindung (IMT-RL) von Aufbauinformationen (INS-MMW-SETUP) zum Aufbauen der zweiten Funkverbindung (MMW-RL); **dadurch gekennzeichnet, dass**
die Leistungsfähigkeitsinformationen (MMW-B-CAP-INFO) Informationen umfassen, welcher Frequenzbereich oder welche mindestens eine Trägerfrequenz des zweiten im Voraus definierten Wellenlängenbereichs durch die Mobilstation (MS) unterstützt wird.

2. Verfahren (MET1) nach Anspruch 1, wobei die Aufbauinformationen (INS-MMW-SETUP) zum Aufbauen der zweiten Funkverbindung (MMW-RL) Folgendes umfasst:
- Informationen über mindestens eine Trägerfrequenz, die zum Aufbauen der zweiten Funkverbindung (MMW-RL) verwendet werden soll, und/oder
- mindestens eine Zellenkennung mindestens einer Funkzelle, die konfiguriert ist, den zweiten im Voraus definierten Wellenlängenbereich zu unterstützen, und/oder
- mindestens einen Systemparameter der mindestens einen Funkzelle, die konfiguriert ist, den zweiten im Voraus definierten Wellenlängenbereich zu unterstützen, und/oder
- Informationen über eine Zugriffspräambel, die verwendet werden soll, wenn eine erste Nachricht über die zweite Funkverbindung (MMW-RL) gesendet wird.

3. Verfahren (MET1) nach einem der vorhergehenden Ansprüche, wobei das Bestimmen (S3) ferner mindestens eine aktuelle Betriebsbedingung des Funkkommunikationssystems (RCS) als Grundlage verwendet.

4. Verfahren (MET1) nach einem der vorhergehenden Ansprüche, wobei der zweite im Voraus definierte Wellenlängenbereich kleinere Wellenlängen als der erste im Voraus definierte Wellenlängenbereich umfasst.

5. Verfahren (MET1) nach Anspruch 4, wobei der erste im Voraus definierte Wellenlängenbereich Frequenzen kleiner als 6 GHz umfasst und wobei der zweite im Voraus definierte Wellenlängenbereich Frequenzen größer als 6 GHz umfasst.

6. Verfahren (MET1) nach Anspruch 5, wobei der erste im Voraus definierte Wellenlängenbereich ein primärer Wellenlängenbereich eines internationalen Mobiltelekommunikations-Funkkommunikationssystems - IMT-Funkkommunikationssystem - ist, das in einem bereichsweiten Abdeckungsbereich ohne Abdeckungslücken des Funkkommunikationssystems (RCS) angewendet wird, und wobei der zweite im Voraus definierte Wellenlängenbereich ein Millimeterwellenlängenbereich ist, der in lückenhaften Abdeckungsbereichen, die lediglich bestimmte Orte (MMW-RC1, MMW-RC2) des Funkkommunikationssystems (RCS) abdecken, angewendet wird.

7. Verfahren (MET1) nach einem der vorhergehenden Ansprüche, wobei das Verfahren (MET-IMT-MME) ferner Folgendes umfasst:
- Überwachen (S4) eines Betriebsmodus eines Funkgeräts des Funkkommunikationssystems (RCS), der zum Aufbauen der zweiten Funkverbindung (MMW-RL) verwendet werden soll, wobei der Betriebsmodus einen Schlafmodus umfasst, und
- Senden (S5) vor dem Aufbauen der zweiten Funkverbindung (MMW-RL) von Informationen (MES7) zu einem Netzknoten (BS, MMW-BS), der das Funkgerät steuert, um das Funkgerät von einem Schlafmodus zu einem Betriebsbereitschaftsmodus zu schalten, wenn das Funkgerät sich im Schlafmodus befindet.

8. Verfahren (MET1) nach Anspruch 7, wobei das Verfahren (MET-IMT-MME) ferner ein Senden (S11) von Informationen (MES10) zum Funkgerät umfasst, um das Funkgerät vom Betriebsbereitschaftsmodus zum Schlafmodus zu schalten, wenn die zweite Funkverbindung (RL2) freigegeben wird und keine weitere Mobilstationen durch das Funkgerät bedient werden.

9. Mobilstationsbasiertes Verfahren (MET2) zum Aufbauen mehrerer Funkverbindungen in einem Funkkommunikationssystem (RCS), das Folgendes umfasst:
- Senden (T1) zum Funkkommunikationssystem (RCS) mittels einer ersten Funkverbindung (IMT-RL), die in einem ersten im Voraus definierten Wellenlängenbereich betrieben wird, von Leistungsfähigkeitsinformationen (MMW-B-CAP-INFO), um in der Lage zu sein, eine zweite Funkverbindung (MMW-RL), die in einem zweiten im Voraus definierten Wellenlängenbereich, der ein Millimeterwellenlängenbereich ist, betreibbar ist, zu verwenden, und wobei die Leistungsfähigkeitsinformationen (MMW-B-CAP-INFO) Informationen umfassen, welcher Frequenzbereich oder welche mindestens eine Trägerfrequenz des zweiten im Voraus definierten Wellenlängenbereichs durch die Mobilstation (MS) unterstützt wird,
- Empfangen (T2) vom Funkkommunikationssystem (RCS) mittels der ersten Funkverbindung (IMT-RL) von Aufbauinformationen (INS-MMW-SETUP) zum Aufbauen der zweiten Funkverbindung (MMW-RL) und
- Aufbauen (T4, T5, T6) einer Verbindung zum Funkkommunikationssystem (RCS) mittels der zweiten Funkverbindung (MWW-RL) ausgelöst durch die Aufbauinformationen (INS-MMW-SETUP).

10. Verfahren (MET2) nach Anspruch 9, wobei die Leistungsfähigkeitsinformationen (MMW-B-CAP-INFO) ein grundlegender Satz Leistungsfähigkeitsinformationen ist, die Informationen umfassen, welche Trägerfrequenzen durch die Mobilstation (MS) im zweiten im Voraus definierten Wellenlängenbereich unterstützt werden, und wobei das Verfahren (MET-MS) ferner ein Senden (T8, T9) während oder nach dem Aufbauen (T4, T5, T6) der Verbindung mittels der zweiten Funkverbindung (MWW-RL) einen vollständigen Satz Leistungsfähigkeitsinformationen (MMW-F-CAP-INFO) oder zusätzliche Leistungsfähigkeitsinformationen (MMW-EXT-CAP-INFO) zum Verwenden der zweiten Funkverbindung (MMW-RL) umfasst; wobei
der vollständige Satz Leistungsfähigkeitsinformationen (MMW-F-CAP-INFO) oder die zusätzlichen Leistungsfähigkeitsinformationen (MMW-EXT-CAP-INFO) Informationen über Folgendes umfassen:
- Datenraten, die mittels der zweiten Funkverbindung (MMW-RL) unterstützt werden, und/oder
- eine Bandbreite, die mittels der zweiten Funkverbindung (MMW-RL) unterstützt wird, und/oder
- Mehrantennenübertragungsmodi mittels der zweiten Funkverbindung (MMW-RL).

11. Computerprogramm, das einen Programmcode zum Durchführen eines Verfahrens (MET1, MET2) nach einem der vorhergehenden Ansprüche, wenn das Computerprogramm in mindestens einem Computer, mindestens einem Prozessor oder mindestens einer programmierbaren Hardware-Komponente ausgeführt wird, enthält.

12. Netzbasiertes Untersystem (NNS1, NNS2) zum Aufbauen mehrerer Funkverbindungen in einem Funkkommunikationssystem (RCS), das Folgendes umfasst:
- ein Empfangsmodul (RC1-NN, NN1), das konfiguriert ist zum Empfangen von einer Mobilstation (MS) mittels einer ersten Funkverbindung (IMT-RL), die in einem ersten im Voraus definierten Wellenlängenbereich betrieben wird, von Leistungsfähigkeitsinformationen (MMW-B-CAP-INFO), um in der Lage zu sein, eine zweite Funkverbindung (MMW-RL), die in einem zweiten im Voraus definierten Wellenlängenbereich, der ein Millimeterwellenlängenbereich ist, betreibbar ist, zu verwenden,
- ein Verarbeitungsmodul (PU-NN, NN1), das konfiguriert ist zum Bestimmen auf der Grundlage der Leistungsfähigkeitsinformationen (MMW-B-CAP-INFO), die Mobilstation (MS) durch die zweite Funkverbindung (MMW-RL) zu bedienen, und
- ein Sendemodul (TR1-NN, NN1), das konfiguriert ist zum Senden zur Mobilstation (MS) mittels der ersten Funkverbindung (IMT-RL) von Aufbauinformationen (INS-MMW-SETUP) zum Aufbauen der zweiten Funkverbindung (MMW-RL); **dadurch gekennzeichnet, dass**
die Leistungsfähigkeitsinformationen (MMW-B-CAP-INFO) Informationen umfassen, welcher Frequenzbereich oder welche mindestens eine Trägerfrequenz des zweiten im Voraus definierten Wellenlängenbereichs durch die Mobilstation (MS) unterstützt wird.

13. Mobilstation (MS, MS1, MS2) zum Aufbauen mehrerer Funkverbindungen in einem Funkkommunikationssystem (RCS), das Folgendes umfasst:
- ein Sendemodul (TR1-MS, TR-MS), das konfiguriert ist zum Senden zum Funkkommunikationssystem (RCS) mittels einer ersten Funkverbindung (IMT-RL), die in einem ersten im Voraus definierten Wellenlängenbereich betrieben wird, von Leistungsfähigkeitsinformationen (MMW-B-CAP-INFO), um in der Lage zu sein, eine zweite Funkverbindung (MMW-RL), die in einem zweiten im Voraus definierten Wellenlängenbereich, der ein Millimeterwellenlängenbereich ist, betreibbar ist, zu verwenden, und wobei die Leistungsfähigkeitsinformationen (MMW-B-CAP-INFO) Informationen umfassen, welcher Frequenzbereich oder welche mindestens eine Trägerfrequenz des zweiten im Voraus definierten Wellenlängenbereichs durch die Mobilstation (MS) unterstützt wird,
- ein Empfangsmodul (RC1-MS, RC-MS), das konfiguriert ist zum Empfangen vom Funkkommunikationssystem (RCS) mittels der ersten Funkverbindung (IMT-RL) von Aufbauinformationen (INS-MMW-SETUP) zum Aufbauen der zweiten Funkverbindung (MMW-RL) und
- ein Sendemodul (TRC2-MS, TRC-MS), das konfiguriert ist zum Aufbauen einer Verbindung zum Funkkommunikationssystem (RCS) mittels der zweiten Funkverbindung (MWW-RL) ausgelöst durch die Aufbauinformationen (INS-MMW-SETUP).

## Revendications

1. Procédé (MET1), au niveau d'un réseau, d'établissement de multiples liaisons radio dans un système de communication radio (RCS), comprenant :
- la réception (SI), depuis une station mobile (MS), par le biais d'une première liaison radio (IMT-RL) exploitée dans une première plage de longueurs d'onde prédéfinie, d'informations de capacité (MMW-B-CAP-INFO) permettant l'utilisation d'une deuxième liaison radio (MMW-RL) exploitable dans une deuxième plage de longueurs d'onde prédéfinie, à savoir une plage de longueurs d'onde millimétriques,
- la détermination (S3) de desservir ladite station mobile (MS) par ladite deuxième liaison radio (MMW-RL) sur la base desdites informations de capacité (MMW-B-CAP-INFO), et
- la transmission (S7) à ladite station mobile (MS), par le biais de ladite première liaison radio (IMT-RL), d'informations d'établissement (INS-MMW-SETUP) pour l'établissement de ladite deuxième liaison radio (MMW-RL) ;
**caractérisé en ce que** lesdites informations de capacité (MMW-B-CAP-INFO) comprennent des informations sur quelle plage de fréquences ou quelle au moins une fréquence porteuse de ladite deuxième plage de longueurs d'onde prédéfinie est prise en charge par ladite station mobile (MS).

2. Procédé (MET1) selon la revendication 1, dans lequel lesdites informations d'établissement (INS-MMW-SETUP) pour l'établissement de ladite deuxième liaison radio (MMW-RL) comprennent :
- des informations concernant au moins une fréquence porteuse à utiliser pour l'établissement de ladite deuxième liaison radio (MMW-RL), et/ou
- au moins un identifiant de cellule d'au moins une cellule radio configurée pour prendre en charge ladite deuxième plage de longueurs d'onde prédéfinie, et/ou
- au moins un paramètre système de ladite au moins une cellule radio configurée pour prendre en charge ladite deuxième plage de longueurs d'onde prédéfinie, et/ou
- des informations concernant un préambule d'accès à utiliser lors de la transmission d'un premier message par le biais de ladite deuxième liaison radio (MMW-RL).

3. Procédé (MET1) selon l'une quelconque des revendications précédentes, dans lequel ladite détermination (S3) est basée en outre sur au moins une condition d'exploitation actuelle dudit système de communication radio (RCS).

4. Procédé (MET1) selon l'une quelconque des revendications précédentes, dans lequel ladite deuxième plage de longueurs d'onde prédéfinie comprend des longueurs d'onde plus petites que celles de ladite première plage de longueurs d'onde prédéfinie.

5. Procédé (MET1) selon la revendication 4, dans lequel ladite première plage de longueurs d'onde prédéfinie comprend des fréquences inférieures à 6 GHz, et dans lequel ladite deuxième plage de fréquences prédéfinie comprend des fréquences supérieures à 6 GHz.

6. Procédé (MET1) selon la revendication 5, dans lequel ladite première plage de longueurs d'onde prédéfinie est une plage de longueurs d'onde primaire d'un système de communication radio de type Télécommunications Mobiles Internationales -IMT- appliquée dans une zone de couverture étendue sans trous de couverture dudit système de communication radio (RCS), et dans lequel ladite deuxième plage de longueurs d'onde prédéfinie est une plage de longueurs d'onde millimétriques appliquée au niveau de zones de couverture éparses ne couvrant que des endroits spécifiques (MMW-RC1, MMW-RC2) dudit système de communication radio (RCS).

7. Procédé (MET1) selon l'une quelconque des revendications précédentes, lequel procédé (MET-IMT-MME) comprend en outre :
- la surveillance (S4) d'une mode de fonctionnement d'un équipement radio dudit système de communication radio (RCS) à utiliser pour l'établissement de ladite deuxième liaison radio (MMW-RL), le mode de fonctionnement comprenant un mode veille, et
- la transmission (S5), préalablement à l'établissement de ladite deuxième liaison radio (MMW-RL), d'informations (MES7) à un nœud de réseau (BS, MMW-BS) commandant ledit équipement radio pour la commutation dudit équipement radio d'un mode veille sur un mode prêt à fonctionner lorsque ledit équipement radio occupe ledit mode veille.

8. Procédé (MET1) selon la revendication 7, lequel procédé (MET-IMT-MME) comprend en outre la transmission (S11) d'informations (MES10) audit équipement radio pour la commutation dudit équipement radio dudit mode prêt à fonctionner sur ledit mode veille lorsque ladite deuxième liaison radio (RL2) est libérée et aucune autre station mobile n'est desservie par ledit équipement radio.

9. Procédé (MET2), au niveau d'une station mobile, d'établissement de multiples liaisons radio dans un système de communication radio (RCS), comprenant :
- la transmission (Tl), audit système de communication radio (RCS), par le biais d'une première liaison radio (IMT-RL) exploitée dans une première plage de longueurs d'onde prédéfinie, d'informations de capacité (MMW-B-CAP-INFO) permettant l'utilisation d'une deuxième liaison radio (MMW-RL) exploitable dans une deuxième plage de longueurs d'onde prédéfinie, à savoir une plage de longueurs d'onde millimétriques, et lesdites informations de capacité (MMW-B-CAP-INFO) comprenant des informations sur quelle plage de fréquences ou quelle au moins une fréquence porteuse de ladite deuxième plage de longueurs d'onde prédéfinie est prise en charge par ladite station mobile (MS),
- la réception (T2), depuis ledit système de communication radio (RCS), par le biais de ladite première liaison radio (IMT-RL), d'informations d'établissement (INS-MMW-SETUP) pour l'établissement de ladite deuxième liaison radio (MMW-RL), et
- l'établissement (T4, T5, T6) d'une connexion avec ledit système de communication radio (RCS) par le biais de ladite deuxième liaison radio (MWW-RL) déclenchée par lesdites informations d'établissement (INS-MMW-SETUP).

10. Procédé (MET2) selon la revendication 9, dans lequel lesdites informations de capacité (MMW-B-CAP-INFO) consistent en un ensemble de base d'informations de capacité comprenant des informations sur quelles fréquences porteuses sont prises en charge par la station mobile (MS) dans la deuxième plage de longueurs d'onde prédéfinie, et lequel procédé (MET-MS) comprend en outre la transmission (T8, T9), durant ou après ledit établissement (T4, T5, T6) de ladite connexion par le biais de ladite deuxième liaison radio (MWW-RL), d'un ensemble complet d'informations de capacité (MMW-F-CAP-INFO) ou d'informations de capacité additionnelles (MMW-EXT-CAP-INFO) pour l'utilisation de ladite deuxième liaison radio (MMW-RL) ;
ledit ensemble complet d'informations de capacité (MMW-F-CAP-INFO) ou lesdites informations de capacité additionnelles (MMW-EXT-CAP-INFO) comprenant des informations concernant :
- des débits de données pris en charge par le biais de ladite deuxième liaison radio (MMW-RL), et/ou
- une bande passante prise en charge par le biais de ladite deuxième liaison radio (MMW-RL), et/ou
- des modes d'émission à antennes multiples pris en charge par le biais de ladite deuxième liaison radio (MMW-RL).

11. Programme d'ordinateur comportant un code de programme permettant de réaliser un procédé (MET1, MET2) selon l'une quelconque des revendications précédentes, lorsque le programme d'ordinateur est exécuté sur au moins un ordinateur, au moins un processeur ou au moins un composant matériel programmable.

12. Sous-système (NNS1, NNS2), au niveau d'un réseau, permettant d'établir de multiples liaisons radio dans un système de communication radio (RCS), comprenant :
- un module récepteur (RC1-NN, NN1) configuré pour recevoir, depuis une station mobile (MS), par le biais d'une première liaison radio (IMT-RL) exploitée dans une première plage de longueurs d'onde prédéfinie, des informations de capacité (MMW-B-CAP-INFO) permettant l'utilisation d'une deuxième liaison radio (MMW-RL) exploitable dans une deuxième plage de longueurs d'onde prédéfinie, à savoir une plage de longueurs d'onde millimétriques,
- un module de traitement (PU-NN, NN1) configuré pour déterminer de desservir ladite station mobile (MS) par ladite deuxième liaison radio (MMW-RL) sur la base desdites informations de capacité (MMW-B-CAP-INFO), et
- un module émetteur (TR1-NN, NN1) configuré pour transmettre à ladite station mobile (MS), par le biais de ladite première liaison radio (IMT-RL), des informations d'établissement (INS-MMW-SETUP) pour l'établissement de ladite deuxième liaison radio (MMW-RL) ;
**caractérisé en ce que** lesdites informations de capacité (MMW-B-CAP-INFO) comprennent des informations sur quelle plage de fréquences ou quelle au moins une fréquence porteuse de ladite deuxième plage de longueurs d'onde prédéfinie est prise en charge par ladite station mobile (MS).

13. Station mobile (MS, MS1, MS2) permettant d'établir de multiples liaisons radio dans un système de communication radio (RCS), comprenant :
- un module émetteur (TR1-MS, TR-MS) configuré pour transmettre, audit système de communication radio (RCS) par le biais d'une première liaison radio (IMT-RL) exploitée dans une première plage de longueurs d'onde prédéfinie, des informations de capacité (MMW-B-CAP-INFO) permettant l'utilisation d'une deuxième liaison radio (MMW-RL) exploitable dans une deuxième plage de longueurs d'onde prédéfinie, à savoir une plage de longueurs d'onde millimétriques, et lesdites informations de capacité (MMW-B-CAP-INFO) comprenant des informations sur quelle plage de fréquences ou quelle au moins une fréquence porteuse de ladite deuxième plage de longueurs d'onde prédéfinie est prise en charge par ladite station mobile (MS),
- un module récepteur (RC1-MS, RC-MS) configuré pour recevoir, depuis ledit système de communication radio (RCS), par le biais de ladite première liaison radio (IMT-RL), des informations d'établissement (INS-MMW-SETUP) pour l'établissement de ladite deuxième liaison radio (MMW-RL), et
- un module émetteur-récepteur (TRC2-MS, TRC-MS) configuré pour établir une connexion avec ledit système de communication radio (RCS) par le biais de ladite deuxième liaison radio (MWW-RL) déclenchée par lesdites informations d'établissement (INS-MMW-SETUP).
